# EUROPÄISCHE PATENTSCHRIFT

(11) **EP 3 379 126 B1**
(45) Veröffentlichungstag und Bekanntmachung des Hinweises auf die Patenterteilung: **23.02.2022**
(21) Anmeldenummer: 18162688.8
(22) Anmeldetag: 20.03.2018
(51) Int. Cl.: F16L 33/34, B29C 65/06, F16L 47/02

(54) **VERBINDUNGSVORRICHTUNG MIT EINEM LEITUNGSANSCHLUSS**
CONNECTING DEVICE WITH A CONDUIT CONNECTION
DISPOSITIF DE RACCORDEMENT POURVU D'UN RACCORDEMENT DE CONDUITE

(30) Priorität: 20.03.2017 DE 102017105931
(43) Veröffentlichungstag der Anmeldung: 26.09.2018
(73) Patentinhaber: VERITAS AG, 63571 Gelnhausen (DE)
(72) Erfinder: GARCIA, Fabien, 63683 Ortenberg (DE)
(74) Vertreter: Patentship Patentanwaltsgesellschaft mbH

(56) Entgegenhaltungen:
- EP-A1- 1 604 805
- EP-A2- 1 217 280
- EP-A2- 2 192 339
- DE-A1-102010 030 718

## Beschreibung

Die vorliegende Erfindung betrifft eine Verbindungsvorrichtung zum Verbinden von fluidführenden Leitungen mit einem Leitungsanschluss. Insbesondere betrifft die vorliegende Erfindung eine Aggregatanbindung, wie z.B. Schnellkupplung, Quick-Connector, Anschlussstutzen, O-Ring-Stutzen, zum Verbinden von fluidführenden Leitungen mit einem Leitungsanschluss.

In einem Kraftfahrzeug wird eine Vielzahl von fluidführenden Leitungen verwendet, um Fluide, wie z.B. Gase oder Flüssigkeiten, zu transportieren. Beim Betrieb eines Verbrennungsmotors in einem Kraftfahrzeug werden Fluide mit hohen Temperaturen und hohem Druck durch die entsprechenden fluidführenden Leitungen geleitet. Um fluidführende Leitungen wirksam miteinander zu verbinden, werden Verbindungsvorrichtungen zum Verbinden der fluidführenden Leitungen verwendet. Hierbei müssen die Verbindungsvorrichtungen fluiddichte und stabile fluidtechnische Verbindungen bereitstellen, welche einem hohen Druck und hohen Temperaturen widerstehen können, hohen dynamischen Belastungen standhalten, eine hohe Lebensdauer aufweisen, sowie kostengünstig und reproduzierbar herstellbar sind. Zudem müssen die Verbindungsvorrichtungen wirksam in dem Kraftfahrzeug befestigt werden können.

In der EP 1 640 141 A2 ist eine Vorrichtung zum Verbinden von fluidführenden Leitungen, insbesondere ein Quick-Connector, offenbart.

In der EP 1 604 805 A1 ist eine Verbindungsvorrichtung, insbesondere ein Quick-Connector, für fluidführende Leitungen offenbart.

In der EP 1 637 792 B1 ist ein Reibschweißverfahren zum Verbinden einer Verbindungsvorrichtung, insbesondere eines Quick-Connectors, mit einer fluidführenden Leitung offenbart.

Die DE 10 2010 030 718 A1 beschreibt eine Rohrverbindung und ein Verfahren zum Herstellen einer solchen Rohrverbindung.

Die EP 2 192 339 A2 beschreibt eine Leitungsanordnung für ein unter Druck stehendes Fluid, insbesondere zur Verbindung eines Getriebes mit einem Ölkühler, mit einer ersten Fluidleitung und mit einer zweiten Fluidleitung, die mittels einer Verbindungsanordnung mit einem Gehäuse, wie einem Getriebegehäuse, verbindbar sind.

Die EP 1 604 805 A1 beschreibt eine Verbindungsvorrichtung, insbesondere einen Quick-Connector für Leitungen mit wenigstens zwei Anschlüssen.

Die EP 1 217 280 A2 beschreibt einen Schlauch aus flexiblem Material.

Es ist die der Erfindung zugrundeliegende Aufgabe, eine Vorrichtung zum Verbinden von fluidführenden Leitungen bereitzustellen, welche vorteilhaft befestigt werden kann.

Diese Aufgabe wird durch Gegenstände mit den Merkmalen nach den unabhängigen Ansprüchen gelöst. Vorteilhafte Ausführungsformen der Erfindung sind Gegenstand der Figuren, der Beschreibung und der abhängigen Ansprüche.

Gemäß einem ersten Aspekt der Erfindung wird die Aufgabe durch eine Verbindungsvorrichtung zum Verbinden von fluidführenden Leitungen, insbesondere Aggregatanbindung, wie z.B. Schnellkupplung, Quick-Connector, Anschlussstutzen, O-Ring-Stutzen, gelöst, mit den im Anspruch 1 definierten Merkmalen.

Dadurch wird beispielsweise der technische Vorteil erreicht, dass durch den an der Wandungsaußenseite gebildeten Befestigungsabschnitt ein besonders wirksames Befestigen der Verbindungsvorrichtung in einem Kraftfahrzeug sichergestellt wird.

Die Wandung des Leitungsanschlusses der Verbindungsvorrichtung weist eine Wandungsinnenseite und eine Wandungsaußenseite auf. Die Wandungsinnenseite der Wandung begrenzt hierbei den Aufnahmebereich zum Aufnehmen der fluidführenden Leitung und stellt dadurch sicher, dass die fluidführende Leitung fluiddicht mit der Verbindungsvorrichtung verbunden werden kann. Die fluidtechnische Verbindung wird durch ein stoffschlüssiges, kraftschlüssiges oder formschlüssiges Verbinden ermöglicht. Eine stoffschlüssige Verbindung kann durch ein Schweißen oder Kleben erfolgen, wobei ein Schweißverfahren, insbesondere ein Rotationsreibschweißverfahren, ein Vibrationsreibschweißverfahren, ein Spiegelschweißverfahren oder ein Laserschweißverfahren umfassen kann. In einem Rotationsreibschweißverfahren wird die Verbindungsvorrichtung insbesondere gegenüber der fluidführenden Leitung rotiert, wobei durch die dabei entstehende Wärme die fluidführende Leitung partiell aufschmilzt und nach dem Abkühlen eine wirksame Verbindung zwischen der fluidführenden Leitung und der Verbindungsvorrichtung bereitgestellt wird. Hierbei kann die fluidführende Leitung und die Verbindungsvorrichtung aus Kunststoff bestehen, wobei dem Kunststoff der Verbindungsvorrichtung insbesondere Glasfasern zugesetzt werden können, wodurch sichergestellt werden kann, dass die fluidführende Leitung beim Reibschweißen aufschmilzt, und nicht die Verbindungsvorrichtung.

Gleichzeitig ist an der Wandungsaußenseite derselben Wandung zumindest ein Befestigungsabschnitt gebildet. Ein Befestigungselement kann mit dem Befestigungsabschnitt verbunden werden, um die Verbindungsvorrichtung zu befestigen, insbesondere um die Verbindungsvorrichtung an einem Bauteil eines Kraftfahrzeuges zu befestigen.

Somit stellt die Wandung zwei Funktionalitäten bereit. Zum einen stellt die Wandungsinnenseite den Kontakt zu der fluidführenden Leitung bereit, um eine fluiddichte Verbindung zwischen der fluidführenden Leitung und der Verbindungsvorrichtung sicherzustellen. Zum anderen ist an der Wandungsaußenseite ein Befestigungsabschnitt angeordnet, welcher ein wirksames Befestigen der Verbindungsvorrichtung, z.B. in einem Motorraum, eines Kraftfahrzeuges ermöglicht.

Durch die Kombination der beiden Funktionalitäten in der Wandung kann der benötigte Bauraum reduziert werden und eine besonders vorteilhafte und einfache Montage der Verbindungsvorrichtung ermöglicht werden.

In einer vorteilhaften Ausführungsform weist der Leitungsanschluss eine weitere Wandung auf, welche eine weitere Wandungsinnenseite aufweist, wobei die weitere Wandungsinnenseite einen Hohlraum der Verbindungsvorrichtung zum Leiten von Fluid begrenzt, wobei die weitere Wandung eine weitere Wandungsaußenseite aufweist, und wobei die weitere Wandungsaußenseite der weiteren Wandung und die Wandungsinnenseite der Wandung den Aufnahmebereich begrenzen.

Dadurch wird beispielsweise der technische Vorteil erreicht, dass eine besonders wirksame Aufnahme der fluidführenden Leitung in dem Aufnahmebereich der Verbindungsvorrichtung sichergestellt wird. Der Aufnahmebereich ist zwischen der Wandung und der weiteren Wandung angeordnet. Wenn eine fluidführende Leitung in den Aufnahmebereich eingeführt wird, kommt die fluidführende Leitung mit der Wandungsinnenseite der Wandung und mit der weiteren Wandungsaußenseite der weiteren Wandung in Kontakt. Hierdurch wird nach dem Verbindungsvorgang eine wirksame fluiddichte Verbindung zwischen der fluidführenden Leitung und der Verbindungsvorrichtung bereitgestellt.

In einer weiteren vorteilhaften Ausführungsform sind der zumindest eine Befestigungsabschnitt und die Wandung einstückig ausgebildet.

Dadurch wird beispielsweise der technische Vorteil erreicht, dass eine konstruktionsoptimierte Fertigung der Verbindungsvorrichtung und eine besonders stabile Befestigung der Verbindungsvorrichtung ermöglicht werden. Hierbei kann der zumindest eine Befestigungsabschnitt und die Wandung insbesondere verschweißt werden, um die einstückige Ausbildung der Bauteile bereitzustellen.

In einer weiteren vorteilhaften Ausführungsform sind die Wandung und/oder die weitere Wandung ringförmig umlaufend an dem Leitungsanschluss gebildet, wobei insbesondere der Aufnahmebereich ringförmig umlaufend an dem Leitungsanschluss gebildet ist.

Dadurch wird beispielsweise der technische Vorteil erreicht, dass die ringförmige umlaufende Wandung und/oder weitere Wandung ein wirksames Einführen der insbesondere mit einem runden Querschnitt ausgebildeten fluidführenden Leitung in den Aufnahmebereich sicherstellen.

In einer weiteren vorteilhaften Ausführungsform erstrecken sich die Wandung und/oder die weitere Wandung entlang einer Längsachse der Verbindungsvorrichtung.

Dadurch wird beispielsweise der technische Vorteil erreicht, dass der Befestigungsabschnitt besonders vorteilhaft an der Wandung angebracht werden kann und/oder dass die fluidführende Leitung besonders vorteilhaft zwischen der Wandung und der weiteren Wandung eingeführt werden kann.

Erfindungsgemäß umfasst der zumindest eine Befestigungsabschnitt einen ersten Befestigungsabschnitt, welcher eine erste Befestigungsnut aufweist, welche die Wandungsaußenseite zumindest abschnittsweise radial umläuft, und wobei ein erstes Befestigungselement mit der ersten Befestigungsnut formschlüssig und/oder kraftschlüssig verbindbar ist.

Dadurch wird beispielsweise der technische Vorteil erreicht, dass die an der Wandungsaußenseite angeordnete Befestigungsnut ein besonders wirksames Einführen und Befestigen des ersten Befestigungselements sicherstellt. Hierzu weist das erste Befestigungselement insbesondere eine Verbindungsgeometrie auf, die eine besonders wirksame Verbindung zwischen dem ersten Befestigungselement und dem ersten Befestigungsabschnitt ermöglicht.

Gemäß einer nicht im Rahmen der Erfindung liegenden Ausführungsform umfasst der zumindest eine Befestigungsabschnitt einen weiteren ersten Befestigungsabschnitt, welcher eine weitere erste Befestigungsnut aufweist, welche die Wandungsaußenseite zumindest abschnittsweise radial umläuft, wobei ein weiteres erstes Befestigungselement mit der weiteren ersten Befestigungsnut formschlüssig und/oder kraftschlüssig verbindbar ist, und wobei insbesondere der erste Befestigungsabschnitt und der weitere erste Befestigungsabschnitt auf gegenüberliegenden Seiten der Verbindungsvorrichtung angeordnet sind.

Dadurch wird beispielsweise der technische Vorteil erreicht, dass durch den ersten Befestigungsabschnitt und den weiteren ersten Befestigungsabschnitt die Verbindungsvorrichtung durch zwei Befestigungselemente besonders wirksam befestigt werden kann. Hierbei sind der erste und weitere erste Befestigungsabschnitt insbesondere auf gegenüberliegenden Seiten der Verbindungsvorrichtung angeordnet, um eine besonders wirksame Befestigung sicherzustellen. Hierbei kann alternativ auch eine Befestigung nur an dem ersten Befestigungsabschnitt oder nur an dem weiteren ersten Befestigungsabschnitt erfolgen, wodurch die Verbindungsvorrichtung flexibel verbaut werden kann.

Erfindungsgemäß umfasst der zumindest eine Befestigungsabschnitt einen zweiten Befestigungsabschnitt, welcher sich von der Wandungsaußenseite der Wandung aus von der Verbindungsvorrichtung weg erstreckt, wobei der zweite Befestigungsabschnitt eine Aufnahmeöffnung aufweist, in welche ein zweites Befestigungselement einführbar ist, um das zweite Befestigungselement mit dem zweiten Befestigungsabschnitt zu verbinden, und wobei der erste Befestigungsabschnitt und der zweite Befestigungsabschnitt auf gegenüberliegenden Seiten der Verbindungsvorrichtung angeordnet sind.

Dadurch wird beispielsweise der technische Vorteil erreicht, dass durch den ersten Befestigungsabschnitt und den zweiten Befestigungsabschnitt die Verbindungsvorrichtung durch zwei Befestigungselemente besonders wirksam befestigt werden kann. Hierbei sind der erste und zweite Befestigungsabschnitt insbesondere auf gegenüberliegenden Seiten der Verbindungsvorrichtung angeordnet, um eine besonders wirksame Befestigung sicherzustellen. Das zweite Befestigungselement kann durch die Aufnahmeöffnung des zweiten Befestigungsabschnitts eingeführt werden, um eine wirksame Befestigung der Verbindungsvorrichtung zu ermöglichen. Hierbei kann alternativ auch eine Befestigung nur an dem ersten Befestigungsabschnitt oder nur an dem zweiten Befestigungsabschnitt erfolgen.

In einer weiteren vorteilhaften Ausführungsform weist der zweite Befestigungsabschnitt einen ersten Abschnittsbereich, welcher an der Wandungsaußenseite der Wandung gebildet ist, und einen zweiten Abschnittsbereich, welcher die Aufnahmeöffnung umfasst, auf, wobei der erste Abschnittsbereich eine erste Wandungsdicke aufweist, und wobei der zweite Abschnittsbereich eine zweite Wandungsdicke aufweist, und wobei die erste Wandungsdicke größer als die zweite Wandungsdicke ist.

Dadurch wird beispielsweise der technische Vorteil erreicht, dass durch die größere Wandungsdicke an den Übergang zwischen der Wandungsaußenseite der Wandung und dem ersten Abschnittsbereich des zweiten Befestigungsabschnitts eine besonders stabile Befestigung der Verbindungsvorrichtung ermöglicht wird.

In einer weiteren vorteilhaften Ausführungsform ist das erste Befestigungselement mit dem ersten Befestigungsabschnitt durch eine Rastverbindung verbindbar ist, und/oder ist das nicht im Rahmen der Erfindung liegende weitere erste Befestigungselement mit dem weiteren ersten Befestigungsabschnitt durch eine Rastverbindung verbindbar.

Dadurch wird beispielsweise der technische Vorteil erreicht, dass eine Rastverbindung eine besonders einfach herzustellende Verbindung zwischen dem jeweiligen Befestigungsabschnitt und dem jeweilige Befestigungselement ermöglicht.

In einer weiteren vorteilhaften Ausführungsform ist die Wandungsinnenseite der Wandung entlang einer Längsachse der Verbindungsvorrichtung gerade ausgebildet.

Dadurch wird beispielsweise der technische Vorteil erreicht, dass die gerade Wandungsinnenseite der Wandung ein besonders wirksames Einführen der fluidführenden Leitung in den Aufnahmebereich der Verbindungsvorrichtung ermöglicht.

In einer weiteren vorteilhaften Ausführungsform ist die weitere Wandungsinnenseite der weiteren Wandung entlang einer Längsachse der Verbindungsvorrichtung kurvenförmig ausgebildet.

Dadurch wird beispielsweise der technische Vorteil erreicht, dass die kurvenförmige weitere Wandungsinnenseite der weiteren Wandung ein besonders wirksames Verbinden der fluidführenden Leitung mit der Verbindungsvorrichtung während des Verbindungsverfahrens ermöglicht.

In einer weiteren vorteilhaften Ausführungsform weist die weitere Wandungsinnenseite der weiteren Wandung einen ersten Wandungsabschnitt auf, welcher konkav ausgebildet ist, und einen zweiten Wandungsabschnitt auf, welcher konvex ausgebildet ist und sich an den ersten Wandungsabschnitt anschließt, und wobei insbesondere zwischen dem ersten und zweiten Wandungsabschnitt ein Wendepunkt angeordnet ist.

Dadurch wird beispielsweise der technische Vorteil erreicht, dass die entsprechende Ausbildung der weiteren Wandungsinnenseite der weiteren Wandung ein besonders wirksames Verbinden der fluidführenden Leitung mit der Verbindungsvorrichtung während des Verbindungsverfahrens ermöglicht.

Gemäß einem zweiten Aspekt der Erfindung wird die Aufgabe durch eine Anordnung zum Verbinden von fluidführenden Leitungen gelöst, mit einer Verbindungsvorrichtung zum Verbinden von fluidführenden Leitungen, insbesondere Aggregatanbindung, wie z.B. Schnellkupplung, Quick-Connector, Anschlussstutzen, O-Ring-Stutzen, nach dem ersten Aspekt; und einer fluidführenden Leitung, welche mit der Verbindungsvorrichtung fluidtechnisch verbunden ist.

Dadurch wird beispielsweise der technische Vorteil erreicht, dass die Anordnung zum Verbinden von fluidführenden Leitungen eine wirksame fluidtechnische Verbindung zwischen einer fluidführenden Leitung und der Verbindungsvorrichtung, insbesondere Aggregatanbindung, wie z.B. Schnellkupplung, Quick-Connector, Anschlussstutzen, O-Ring-Stutzen, sicherstellt.

Gemäß einem dritten Aspekt der Erfindung wird die Aufgabe durch ein Verfahren zum Verbinden von fluidführenden Leitungen gelöst, umfassend die im Anspruch 12 definierten Schritte.

Dadurch wird beispielsweise der technische Vorteil erreicht, dass eine besonders fluiddichte Verbindung zwischen der fluidführenden Leitung und der Verbindungsvorrichtung bereitstellt wird, und dass durch das Befestigungselement die Verbindungsvorrichtung besonders wirksam befestigt werden kann. Hierbei kann die fluidführende Leitung mit der Verbindungsvorrichtung nicht nur durch Schweißen oder Kleben verbunden werden, sondern auch durch eine formschlüssige und/oder kraftschlüssige Verbindung.

Ausführungsbeispiele sind in den Zeichnungen dargestellt und werden im Folgenden näher beschrieben.

Es zeigen:
Fig. 1 eine perspektivische Ansicht einer Verbindungsvorrichtung zum Verbinden von fluidführenden Leitungen gemäß einer ersten, nicht im Rahmen der Erfindung liegenden Ausführungsform;
Fig. 2 eine perspektivische Ansicht einer Verbindungsvorrichtung zum Verbinden von fluidführenden Leitungen gemäß einer zweiten, im Rahmen der Erfindung liegenden Ausführungsform;
Fig. 3 eine perspektivische Ansicht einer, nicht im Rahmen der Erfindung liegenden Anordnung zu Verbinden von fluidführenden Leitungen; und
Fig. 4 eine schematische Ansicht eines Verfahrens zum Verbinden von fluidführenden Leitungen.

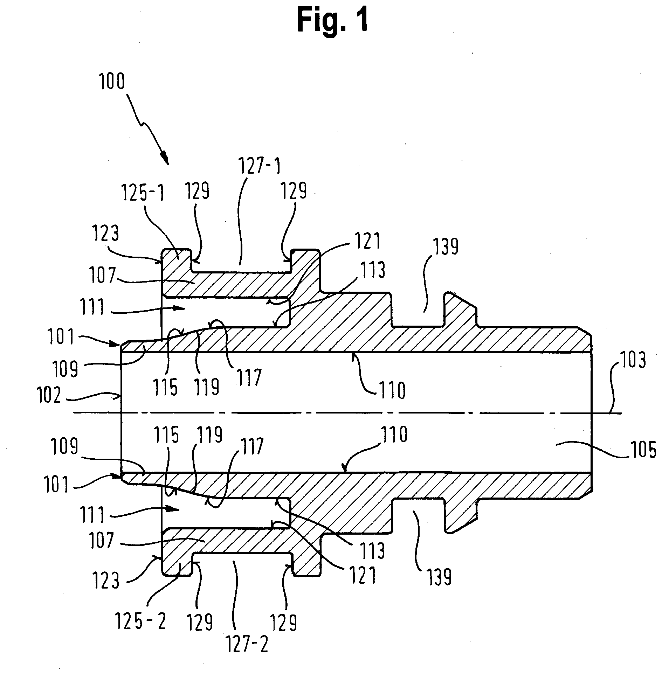

Fig. 1 zeigt eine perspektivische Ansicht einer Verbindungsvorrichtung 100 zum Verbinden von fluidführenden Leitungen gemäß einer ersten, nicht im Rahmen der Erfindung liegenden Ausführungsform in Querschnittansicht.

Die in Fig. 1 dargestellte Verbindungsvorrichtung 100 ist als eine Aggregatanbindung, wie z.B. Schnellkupplung, Quick-Connector, Anschlussstutzen, O-Ring-Stutzen, ausgebildet und ermöglicht ein effizientes und einfaches Verbinden der Verbindungsvorrichtung 100 mit einer in Fig. 1 nicht dargestellten fluidführenden Leitung. Die Verbindungsvorrichtung 100 ist ausschnittsweise im Bereich eines Leitungsanschlusses 101 der Verbindungsvorrichtung 100 gezeigt, wobei der Leitungsanschluss 101 an einer Stirnseite 102 der Verbindungsvorrichtung 100 gebildet ist. Die Verbindungsvorrichtung 100 ist rotationssymmetrisch bezüglich ihrer Längsachse 103 ausgebildet. Im Falle einer wirksamen fluidtechnischen Verbindung zwischen dem Leitungsanschluss 101 der Verbindungsvorrichtung 100 und einer fluidführenden Leitung können Fluide aus der fluidführenden Leitung wirksam durch einen Hohlraum 105 der Verbindungsvorrichtung 100 fluidtechnisch geleitet werden.

Die fluidführende Leitung kann hierbei eine beliebige fluidführende Leitung umfassen, welche in einem Kraftfahrzeug verwendet wird, um Fluide, z.B. Flüssigkeit oder Gase, zu leiten. Hierbei umfasst die fluidführende Leitung insbesondere eine Getriebeölkühlerleitung.

Die fluidführende Leitung kann hierbei einen Kunststoff umfassen. Die Verbindungsvorrichtung 100 kann hierbei einen Kunststoff umfassen, welcher insbesondere mit Glasfasern versetzt ist und dadurch einen Schmelzpunkt aufweist, der größer als der Schmelzpunkt des Kunststoffs der fluidführenden Leitung ist.

Der Leitungsanschluss 101 der Verbindungsvorrichtung 100 weist eine Wandung 107 und eine weitere Wandung 109 auf, welche einen Aufnahmebereich 111 begrenzen, welcher ausgebildet ist, die fluidführende Leitung aufzunehmen. Die Wandung 107 und die weitere Wandung 109 erstrecken sich hierbei entlang der Längsachse 103 der Verbindungsvorrichtung 100. Wie aus der Fig. 1 nicht ersichtlich ist, sind die Wandung 107 und/oder die weitere Wandung 109 insbesondere ringförmig umlaufend an dem Leitungsanschluss 101 angeordnet und begrenzen somit den ebenfalls insbesondere ringförmig umlaufenden Aufnahmebereich 111, welcher ausgebildet ist, die fluidführende Leitung, welche einen insbesondere ringförmigen Querschnitt aufweist, aufzunehmen.

Die Verbindung zwischen dem Leitungsanschluss 101 der Verbindungsvorrichtung 100 und der fluidführenden Leitung findet insbesondere durch ein Rotationsreibschweißverfahren statt. Hierbei wird die fluidführende Leitung in den Aufnahmebereich 111 der Verbindungsvorrichtung 100 eingeführt. Durch eine Rotation der fluidführenden Leitung in der Verbindungsvorrichtung 100 oder durch eine Rotation der Verbindungsvorrichtung 100 um die fluidführenden Leitung entsteht Reibungswärme an den Kontaktflächen zwischen der fluidführenden Leitung und den Aufnahmebereich 111 begrenzenden Flächen der Verbindungsvorrichtung 100. Da der Kunststoff der fluidführenden Leitung einen geringeren Schmelzpunkt aufweist, als das Material der Verbindungsvorrichtung 100 schmilzt der Kunststoff der fluidführenden Leitung und der geschmolzene Kunststoff füllt die Zwischenräume zwischen der fluidführenden Leitung und der Verbindungsvorrichtung 100. Nach dem Ende der Rotationsbewegung kühlt der geschmolzene Kunststoff ab und härtet dabei aus, wodurch eine mechanisch stabile und fluiddichte Verbindung zwischen der fluidführenden Leitung und der Verbindungsvorrichtung 100 gebildet wird.

Die weitere Wandung 109 weist eine weitere Wandungsinnenseite 110 auf, welcher den Hohlraum 105 der Verbindungsvorrichtung 100, insbesondere im Bereich des Leitungsanschlusses 101, begrenzt. Die weitere Wandung 109 weist ferner eine dem Aufnahmebereich 111 zugewandte weitere Wandungsaußenseite 113 auf, welche entlang der Längsachse 103 der Verbindungsvorrichtung 100 kurvenförmig ausgebildet ist, um ein besonders wirksames Einführen der fluidführenden Leitung in den Aufnahmebereich 111 zu ermöglichen. Hierbei weist die weitere Wandungsaußenseite 113 einen ersten Wandungsabschnitt 115, welcher konkav gebildet ist, und einen zweiten Wandungsabschnitt 117 auf, welcher konvex gebildet ist, wobei zwischen dem ersten Wandungsabschnitt 115 und dem zweiten Wandungsabschnitt 117 ein Wendepunkt 119 angeordnet ist.

Die Wandung 107 weist eine Wandungsinnenseite 121 auf, welche dem Aufnahmebereich 111 zugewandt ist, und weist eine Wandungsaußenseite 123 auf. Die Wandungsinnenseite 121 der Wandung 107 und die weitere Wandungsaußenseite 113 der weiteren Wandung 109 begrenzen hierbei den Aufnahmebereich 111 der Verbindungsvorrichtung 100.

An der Wandungsaußenseite 123 der Wandung 107 ist ein erster Befestigungsabschnitt 125-1 und ein weiterer erster Befestigungsabschnitt 125-2 gebildet, wobei der erste Befestigungsabschnitt 125-1 und der weitere erste Befestigungsabschnitt 125-2 auf gegenüberliegenden Seiten der Verbindungsvorrichtung 100 angeordnet sind. Der erste Befestigungsabschnitt 125-1 und der weitere erste Befestigungsabschnitt 125-2 sind jeweils einstückig mit der Wandung 107 gebildet und gehen direkt in die Wandung 107 über.

Der erste Befestigungsabschnitt 125-1 und der weitere erste Befestigungsabschnitt 125-2 weisen jeweils eine erste Befestigungsnut 127-1, bzw. eine weitere erste Befestigungsnut 127-2 auf, welche die Wandung 107 jeweils zumindest abschnittsweise radial umläuft und jeweils von zwei Kanten 129 begrenzt ist.

Der erste Befestigungsabschnitt 125-1 ist ausgebildet mit einem ersten Befestigungselement verbunden zu werden und der weitere erste Befestigungsabschnitt 125-2 ist ausgebildet mit einem weiteren ersten Befestigungselement verbunden zu werden. Die in Fig. 1 nicht dargestellten Befestigungselemente werden hierbei in die jeweiligen Befestigungsabschnitte 125-1, 125-2 eingeführt und insbesondere durch eine Rastverbindung mit den jeweiligen Befestigungsabschnitten 125-1, 125-2 wirksam verbunden.

Die Befestigungselemente stellen hierbei eine wirksame Befestigung der mit der fluidführenden Leitung verbundenen Verbindungsvorrichtung 100 in dem Kraftfahrzeug sicher. Dadurch, dass die jeweiligen Befestigungsabschnitte 125-1, 125-2 auf gegenüberliegenden Seiten der Verbindungsvorrichtung 100 angeordnet sind, kann eine besonders stabile, bzw. flexible, Befestigung der Verbindungsvorrichtung 100 sichergestellt werden und es kann der benötigte Bauraum reduziert werden.

Die Verbindungsvorrichtung 100 weist ferner insbesondere eine Aussparung 139 zur Aufnahme eines Dichtungsrings auf.

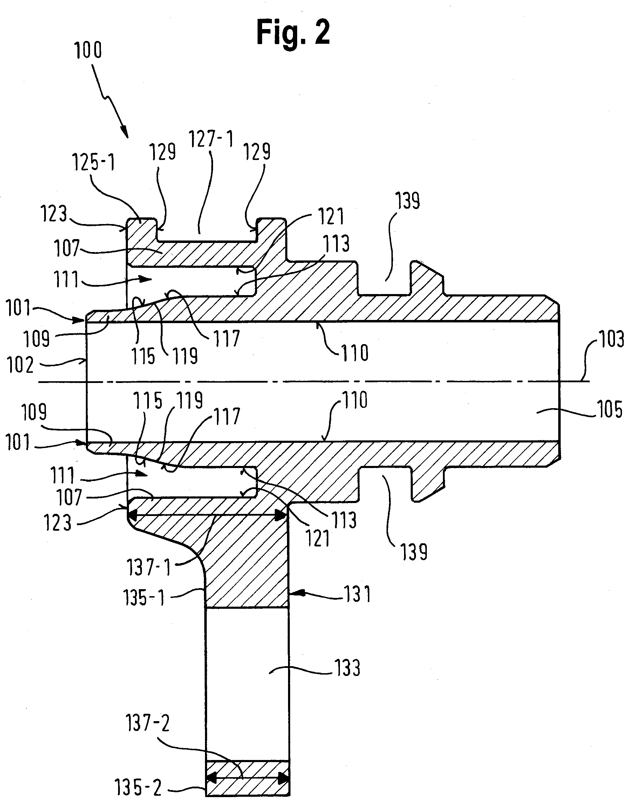

Fig. 2 zeigt eine perspektivische Ansicht einer Verbindungsvorrichtung 100 zum Verbinden von fluidführenden Leitungen gemäß einer zweiten, im Rahmen der Erfindung liegenden Ausführungsform in Querschnittansicht.

Die Verbindungsvorrichtung 100 ist insbesondere eine Aggregatanbindung, wie z.B. Schnellkupplung, Quick-Connector, Anschlussstutzen, O-Ring-Stutzen.

Im Falle einer wirksamen fluidtechnischen Verbindung durch Rotationsreibschweißen zwischen dem Leitungsanschluss 101 der Verbindungsvorrichtung 100 und einer fluidführenden Leitung können Fluide aus der fluidführenden Leitung wirksam durch einen Hohlraum 105 der Verbindungsvorrichtung 100 fluidtechnisch geleitet werden.

Der Leitungsanschluss 101 der Verbindungsvorrichtung 100 weist eine Wandung 107 und einen weitere Wandung 109 auf, welche einen Aufnahmebereich 111 begrenzen, welcher ausgebildet ist, die fluidführende Leitung aufzunehmen. Die Wandung 107 und die weitere Wandung 109 erstrecken sich hierbei entlang der Längsachse 103 der Verbindungsvorrichtung 100. Die Wandung 107 und die weitere Wandung 109 begrenzen hierbei den Aufnahmebereich 111 der Verbindungsvorrichtung 100.

Die weitere Wandung 109 ist hierbei gemäß der in Fig. 1 dargestellten ersten Ausführungsform ausgebildet und weist hierbei eine dem Aufnahmebereich 111 zugewandte weitere Wandungsaußenseite 113 auf, welche entlang der Längsachse 103 der Verbindungsvorrichtung 100 kurvenförmig ausgebildet ist. Die weitere Wandungsaußenseite 113 weist einen konkaven ersten Wandungsabschnitt 115 und einen konvex zweiten Wandungsabschnitt 117 auf, wobei zwischen dem ersten Wandungsabschnitt 115 und dem zweiten Wandungsabschnitt 117 ein Wendepunkt 119 angeordnet ist.

Die Wandung 107 weist hierbei eine Wandungsinnenseite 121 auf, welche dem Aufnahmebereich 111 zugewandt ist und entlang der Längsachse 103 der Verbindungsvorrichtung 100 gerade ausgebildet ist.

An einer Wandungsaußenseite 123 ist ein erster Befestigungsabschnitt 125-1 und ein zweiter Befestigungsabschnitt 131 gebildet, wobei der erste Befestigungsabschnitt 125-1 und der zweite Befestigungsabschnitt 131 auf gegenüberliegenden Seiten der Verbindungsvorrichtung 100 angeordnet sind. Der erste Befestigungsabschnitt 125-1 und der zweite Befestigungsabschnitt 131 sind jeweils einstückig mit der Wandung 107 ausgebildet und gehen direkt in die Wandung 107 über.

Der erste Befestigungsabschnitt 125-1 weist eine erste Befestigungsnut 127-1 auf, welche die Wandung 107 jeweils zumindest abschnittsweise radial umläuft und von zwei Kanten 129 begrenzt ist. Der erste Befestigungsabschnitt 125-1 ist ausgebildet mit einem ersten Befestigungselement verbunden zu werden. Das in Fig. 2 nicht dargestellten erste Befestigungselement wird hierbei in den ersten Befestigungsabschnitt 125-1 eingeführt und insbesondere durch eine Rastverbindung mit dem ersten Befestigungsabschnitt 125-1 wirksam verbunden.

Der zweite Befestigungsabschnitt 131 erstreckt sich von der Wandungsaußenseite 123 von der Verbindungsvorrichtung 100 weg und weist eine Aufnahmeöffnung 133 auf, in welche ein zweites Befestigungselement einführbar ist, um das zweite Befestigungselement mit dem zweiten Befestigungsabschnitt 131 zu verbinden. Der erste Befestigungsabschnitt 125-1 und der zweite Befestigungsabschnitt 131 sind auf gegenüberliegenden Seiten der Verbindungsvorrichtung 100 angeordnet.

Der zweite Befestigungsabschnitt 131 weist einen ersten Abschnittsbereich 135-1 auf, welcher mit der Wandungsaußenseite 123 verbunden ist, und weist einen zweiten Abschnittsbereich 135-2 auf, welcher die Aufnahmeöffnung 133 umfasst. Hierbei weist der erste Abschnittsbereich 135-1 eine erste Wandungsdicke 137-1 auf, und weist der zweite Abschnittsbereich 135-2 eine zweite Wandungsdicke 137-2 auf, und wobei die erste Wandungsdicke 137-1 größer als die zweite Wandungsdicke 137-2 ist.

Ein zweites Befestigungselement kann vorteilhaft in die Aufnahmeöffnung 133 eingeführt werden, um eine besonders wirksame Befestigung der Verbindungsvorrichtung 100 sicherzustellen.

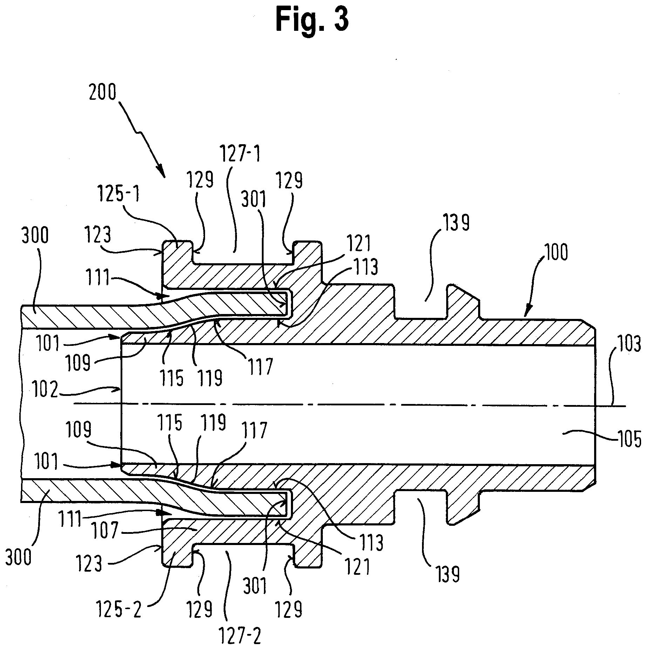

Fig. 3 zeigt eine perspektivische Ansicht einer Anordnung zum Verbinden von fluidführenden Leitungen 300 in einer Querschnittdarstellung. Die Anordnung 200 zum Verbinden von fluidführenden Leitungen 300 umfasst die Verbindungsvorrichtung 100 gemäß der in Fig. 1 dargestellten ersten , nicht im Rahmen der Erfindung liegenden Ausführungsform und eine mit der Verbindungsvorrichtung 100 fluidtechnisch verbundene fluidführende Leitung 300, welche ein Leitungsende 301 aufweist.

Die Verbindung zwischen dem Leitungsanschluss 101 der Verbindungsvorrichtung 100 und der fluidführenden Leitung 300 findet insbesondere durch ein Rotationsreibschweißverfahren statt. Hierbei wird die fluidführende Leitung 300 in den Aufnahmebereich 111 der Verbindungsvorrichtung 100 eingeführt. Durch eine Rotation der fluidführenden Leitung 300 oder durch eine Rotation der Verbindungsvorrichtung 100 entsteht Reibungswärme an den Kontaktflächen zwischen der fluidführenden Leitung 300 und dem Aufnahmebereich 111 der Verbindungsvorrichtung 100. Da der Kunststoff der fluidführenden Leitung 300 einen geringeren Schmelzpunkt aufweist, als das mit Glasfasern versetzte Material der Verbindungsvorrichtung 100 schmilzt der Kunststoff der fluidführenden Leitung 300 und der geschmolzene Kunststoff füllt die Zwischenräume zwischen der fluidführenden Leitung 300 und der Verbindungsvorrichtung 100. Nach dem Ende der Rotationsbewegung kühlt der geschmolzene Kunststoff ab und härtet dabei aus, wodurch eine mechanisch stabile und fluiddichte Verbindung zwischen der fluidführenden Leitung 300 und der Verbindungsvorrichtung 100 gebildet wird. Das Verbinden der fluidführenden Leitung 300 mit der Verbindungsvorrichtung 100 kann alternativ durch ein Vibrationsreibschweißverfahren, ein Spiegelschweißverfahren oder ein Laserschweißverfahren durchgeführt werden.

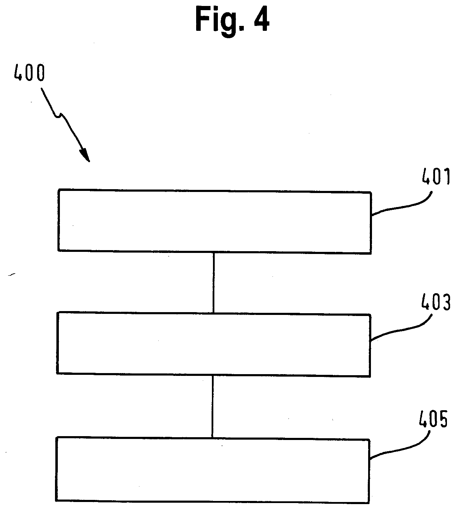

Fig. 4 zeigt eine schematische Ansicht eines Verfahrens zum Verbinden von fluidführenden Leitungen.

Das Verfahren 400 umfasst als ersten Schritt das Einführen 401 einer fluidführenden Leitung 300 in eine Verbindungsvorrichtung 100 zum Verbinden von fluidführenden Leitungen 300, insbesondere Aggregatanbindung, wie z.B. Schnellkupplung, Quick-Connector, Anschlussstutzen, O-Ring-Stutzen, wobei die Verbindungsvorrichtung 100 einen Leitungsanschluss 101 aufweist, welcher an einer Stirnseite 102 der Verbindungsvorrichtung 100 gebildet ist, wobei der Leitungsanschluss 101 eine Wandung 107 aufweist, wobei die Wandung 107 eine Wandungsinnenseite 121 aufweist, welche einen Aufnahmebereich 111 begrenzt, wobei der Aufnahmebereich 111 ausgebildet ist, eine fluidführende Leitung 300 aufzunehmen, und wobei die Wandung 107 eine Wandungsaußenseite 123 aufweist, und wobei die Verbindungsvorrichtung 100 zumindest einen Befestigungsabschnitt 125-1, 125-2, 131 aufweist, welcher an der Wandungsaußenseite 123 gebildet ist, und welcher mit zumindest einem Befestigungselement verbindbar ist.

Das Verfahren 400 umfasst als zweiten Schritt das Verbinden 403 der fluidführenden Leitung 300 mit der Verbindungsvorrichtung 100, insbesondere durch Schweißen oder Kleben.

Das Verfahren 400 umfasst als dritten Schritt das Verbinden 405 des zumindest einen Befestigungsabschnitts 125-1, 125-2, 131 der Verbindungsvorrichtung 100 mit zumindest einem Befestigungselement.

Der Schutzbereich der vorliegenden Erfindung ist durch die Ansprüche gegeben und wird durch die in der Beschreibung erläuterten oder den Figuren gezeigten Merkmale nicht beschränkt.

### BEZUGSZEICHENLISTE

- 100: Verbindungsvorrichtung
- 101: Leitungsanschluss
- 102: Stirnseite der Verbindungsvorrichtung
- 103: Längsachse der Verbindungsvorrichtung
- 105: Hohlraum der Verbindungsvorrichtung
- 107: Wandung
- 109: Weitere Wandung
- 110: Weitere Wandungsinnenseite der weiteren Wandung
- 111: Aufnahmebereich der Verbindungsvorrichtung
- 113: Weitere Wandungsaußenseite der weiteren Wandung
- 115: Erster Wandungsabschnitt
- 117: Zweiter Wandungsabschnitt
- 119: Wendepunkt
- 121: Wandungsinnenseite der Wandung
- 123: Wandungsaußenseite der Wandung
- 125-1: Erster Befestigungsabschnitt
- 125-2: Weiterer erster Befestigungsabschnitt
- 127-1: Erste Befestigungsnut
- 127-2: Weitere erste Befestigungsnut
- 129: Kante
- 131: Zweiter Befestigungsabschnitt
- 133: Aufnahmeöffnung
- 135-1: Erster Abschnittsbereich
- 135-2: Zweiter Abschnittsbereich
- 137-1: Erste Wandungsdicke
- 137-2: Zweite Wandungsdicke
- 139: Aussparung
- 200: Anordnung zum Verbinden von fluidführenden Leitungen
- 300: Fluidführende Leitung
- 301: Leitungsende der fluidführenden Leitung
- 400: Verfahren zum Verbinden von fluidführenden Leitungen
- 401: Einführen der fluidführenden Leitung in eine Verbindungsvorrichtung
- 403: Verbinden der fluidführenden Leitung
- 405: Verbinden des Befestigungselements mit dem Befestigungsabschnitt

## Patentansprüche

1. Verbindungsvorrichtung (100) zum Verbinden von fluidführenden Leitungen (300) mit:
einem Leitungsanschluss (101), welcher an einer Stirnseite (102) der Verbindungsvorrichtung (100) gebildet ist, wobei der Leitungsanschluss (101) eine Wandung (107) aufweist,
wobei die Wandung (107) eine Wandungsinnenseite (121) aufweist, welche einen Aufnahmebereich (111) begrenzt, wobei der Aufnahmebereich (111) ausgebildet ist, eine fluidführende Leitung (300) aufzunehmen, und wobei die Wandung (107) eine Wandungsaußenseite (123) aufweist; und
zumindest einem Befestigungsabschnitt (125-1, 125-2, 131), welcher an der Wandungsaußenseite (123) gebildet ist, und welcher mit zumindest einem Befestigungselement zum Befestigen der Verbindungsvorrichtung (100) verbindbar ist,
wobei der zumindest eine Befestigungsabschnitt (125-1, 125-2, 131) einen ersten Befestigungsabschnitt (125-1) umfasst, welcher eine erste Befestigungsnut (127-1) aufweist, welche die Wandungsaußenseite (123) der Wandung (107) zumindest abschnittsweise radial umläuft, und wobei ein erstes Befestigungselement mit der ersten Befestigungsnut (127-1) formschlüssig und/oder kraftschlüssig verbindbar ist, und
wobei der zumindest eine Befestigungsabschnitt (125-1, 125-2, 131) einen zweiten Befestigungsabschnitt (131) umfasst, welcher sich von der Wandungsaußenseite (123) der Wandung (107) aus von der Verbindungsvorrichtung (100) weg erstreckt, wobei der zweite Befestigungsabschnitt (131) eine Aufnahmeöffnung (133) aufweist, in welche ein zweites Befestigungselement einführbar ist, um das zweite Befestigungselement mit dem zweiten Befestigungsabschnitt (125-2) zu verbinden, und wobei der erste Befestigungsabschnitt (125-1) und der zweite Befestigungsabschnitt (125-2) auf gegenüberliegenden Seiten der Verbindungsvorrichtung (100) angeordnet sind.

2. Verbindungsvorrichtung (100) nach Anspruch 1, wobei der Leitungsanschluss (101) eine weitere Wandung (109) aufweist, welche eine weitere Wandungsinnenseite (110) aufweist, wobei die weitere Wandungsinnenseite (110) einen Hohlraum (105) der Verbindungsvorrichtung (100) zum Leiten von Fluid begrenzt,
wobei die weitere Wandung (109) eine weitere Wandungsaußenseite (113) aufweist, und wobei die weitere Wandungsaußenseite (113) der weiteren Wandung (109) und die Wandungsinnenseite (110) der Wandung (107) den Aufnahmebereich (111) begrenzen.

3. Verbindungsvorrichtung (100) nach Anspruch 1 oder 2, wobei der zumindest eine Befestigungsabschnitt (125-1, 125-2, 131) und die Wandung (107) einstückig ausgebildet sind.

4. Verbindungsvorrichtung (100) nach einem der vorangehenden Ansprüche, wobei die Wandung (107) und/oder die weitere Wandung (109) ringförmig umlaufend an dem Leitungsanschluss (101) gebildet sind, und wobei insbesondere der Aufnahmebereich (111) ringförmig umlaufend an dem Leitungsanschluss (101) gebildet ist.

5. Verbindungsvorrichtung (100) nach einem der vorangehenden Ansprüche, wobei sich die Wandung (107) und/oder die weitere Wandung (109) entlang einer Längsachse (103) der Verbindungsvorrichtung (100) erstrecken.

6. Verbindungsvorrichtung (100) nach einem der vorangehenden Ansprüche, wobei der zweite Befestigungsabschnitt (131) einen ersten Abschnittsbereich (135-1), welcher an der Wandungsaußenseite (123) der Wandung (107) gebildet ist, und einen zweiten Abschnittsbereich (135-2), welcher die Aufnahmeöffnung (133) umfasst, aufweist, wobei der erste Abschnittsbereich (135-1) eine erste Wandungsdicke (137-1) aufweist, und wobei der zweite Abschnittsbereich (135-2) eine zweite Wandungsdicke (137-2) aufweist, und wobei die erste Wandungsdicke (137-1) größer als die zweite Wandungsdicke (137-2) ist.

7. Verbindungsvorrichtung (100) nach einem der vorangehenden Ansprüche, wobei das erste Befestigungselement mit dem ersten Befestigungsabschnitt (125-1) durch eine Rastverbindung verbindbar ist.

8. Verbindungsvorrichtung (100) nach einem der vorangehenden Ansprüche, wobei die Wandungsinnenseite (121) der Wandung (107) entlang einer Längsachse (103) der Verbindungsvorrichtung (100) gerade ausgebildet ist.

9. Verbindungsvorrichtung (100) nach einem der Ansprüche 2 bis 8, wobei die weitere Wandungsaußenseite (113) der weiteren Wandung (109) entlang einer Längsachse (103) der Verbindungsvorrichtung (100) kurvenförmig ausgebildet ist.

10. Verbindungsvorrichtung (100) nach Anspruch 9, wobei die weitere Wandungsaußenseite (113) der weiteren Wandung (109) einen ersten Wandungsabschnitt (115) aufweist, welcher konkav ausgebildet ist, und einen zweiten Wandungsabschnitt (117 aufweist, welcher konvex ausgebildet ist und sich an den ersten Wandungsabschnitt (115) anschließt, und wobei insbesondere zwischen dem ersten und zweiten Wandungsabschnitt (117) ein Wendepunkt (119) angeordnet ist.

11. Anordnung (200) zum Verbinden von fluidführenden Leitungen (300), mit:
einer Verbindungsvorrichtung (100) zum Verbinden von fluidführenden Leitungen (300) nach einem der Ansprüche 1 bis 10; und
einer fluidführenden Leitung (300), welche mit der Verbindungsvorrichtung (100) fluidtechnisch verbunden ist.

12. Verfahren (400) zum Verbinden von fluidführenden Leitungen (300), umfassend die folgenden Schritte:
Einführen (401) einer fluidführenden Leitung (300) in eine Verbindungsvorrichtung (100) zum Verbinden von fluidführenden Leitungen (300) nach einem der Ansprüche 1 bis 10;
Verbinden (403) der fluidführenden Leitung (300) mit der Verbindungsvorrichtung (100), insbesondere durch Schweißen oder Kleben; und
Verbinden (405) des zumindest einen Befestigungsabschnitts (125-1, 125-2, 131) der Verbindungsvorrichtung (100) mit zumindest einem Befestigungselement.

## Claims

1. Connection device (100) for connecting fluid-conducting lines (300), comprising:
a line connection (101) which is formed at a front side (102) of the connection device (100), wherein the line connection (101) comprises a wall (107),
wherein the wall (107) comprises a wall interior side (121) which limits a receiving area (111), wherein the receiving area (111) is configured to receive a fluid-conducting line (300), and wherein the wall (107) comprises a wall exterior side (123); and
at least one fastening section (125-1, 125-2, 131) which is formed at the wall exterior side (123) and which is connectable to at least one fastening element for fastening the connection device (100),
wherein the at least one fastening section (125-1, 125-2, 131) comprises a first fastening section (125-1) which comprises a first fastening groove (127-1) which at least partially radially circulates the wall exterior side (123) of the wall (107), and wherein a first fastening element is connectable to the first fastening groove (127-1) in a form fitting and/or force fitting manner, and
wherein the at least one fastening section (125-1, 125-2, 131) comprises a second fastening section (131) which extends from the wall exterior side (123) of the wall (107) away from the connection device (100), wherein the second fastening section (131) comprises a receiving opening (133) into which a second fastening element is insertable in order to connect the second fastening element to the second fastening section (125-2), and wherein the first fastening section (125-1) and the second fastening section (125-2) are arranged at opposite sides of the connection device (100).

2. Connection device (100) according to claim 1, wherein the line connection (101) comprises a further wall (109) which comprises a further wall interior side (110), wherein the further wall interior side (110) limits a cavity (105) of the connection device (100) for conducting fluid, wherein the further wall (109) comprises a further wall exterior side (113), and wherein the further wall exterior side (113) of the further wall (109) and the wall interior side (110) of the wall (107) limit the receiving area (111).

3. Connection device (100) according to claim 1 or 2, wherein the at least one fastening section (125-1, 125-2, 131) and the wall (107) are formed integrally.

4. Connection device (100) according to one of the preceding claims, wherein the wall (107) and/or the further wall (109) are formed annularly circumferentially at the line connection (101), and wherein in particular the receiving area (111) is formed annularly circumferentially at the line connection (101).

5. Connection device (100) according to one of the preceding claims, wherein the wall (107) and/or the further wall (109) extend along a longitudinal axis (103) of the connection device (100).

6. Connection device (100) according to one of the preceding claims, wherein the second fastening section (131) comprises a first section area (135-1) which is formed at the wall exterior side (123) of the wall (107), and a second section area (135-2), which comprises the receiving opening (133), wherein the first section area (135-1) has a first wall thickness (137-1), and wherein the second section area (135-2) has a second wall thickness (137-2), and wherein the first wall thickness (137-1) is greater than the second wall thickness (137-2).

7. Connection device (100) according to one of the preceding claims, wherein the first fastening element is connectable to the first fastening section (125-1) by a latching connection.

8. Connection device (100) according to one of the preceding claims, wherein the wall interior side (121) of the wall (107) is formed straight along a longitudinal axis (103) of the connection device (100).

9. Connection device (100) according to one of claims 2 to 8, wherein the further wall exterior side (113) of the further wall (109) is formed curved along a longitudinal axis (103) of the connection device (100).

10. Connection device (100) according to claim 9, wherein the further wall exterior side (113) of the further wall (109) comprises a first wall section (115) which is formed concavely, and a second wall section (117 which is formed convexly and adjoins the first wall section (115), and wherein in particular a turning point (119) is arranged between the first and second wall section (117).

11. Arrangement (200) for connecting fluid-conducting lines (300), comprising:
a connection device (100) for connecting fluid-conducting lines (300) according to one of claims 1 to 10; and
a fluid-conducting line (300) which is fluidically connected to the connection device (100).

12. Method (400) for connecting fluid-conducting lines (300), comprising the following steps:
inserting (401) a fluid-conducting line (300) into a connection device (100) for connecting fluid-conducting lines (300) according to one of claims 1 to 10;
connecting (403) the fluid-conducting line (300) to the connection device (100), in particular by welding or gluing; and
connecting (405) the at least one fastening section (125-1, 125-2, 131) of the connection device (100) to at least one fastening element.

## Revendications

1. Dispositif de raccordement (100) permettant de raccorder des conduites de fluide (300), comprenant :
un raccord de conduite (101) qui est formé sur une face frontale (102) du dispositif de raccordement (100), le raccord de conduite (101) présentant une paroi (107),
la paroi (107) présentant une face intérieure de paroi (121) qui délimite une zone de réception (111), la zone de réception (111) étant réalisée pour recevoir une conduite de fluide (300), et la paroi (107) présentant une face extérieure de paroi (123) ; et
au moins une partie de fixation (125-1, 125-2, 131) qui est formée sur la face extérieure de paroi (123) et qui peut être raccordée à au moins un élément de fixation pour la fixation du dispositif de raccordement (100),
ladite au moins une partie de fixation (125-1, 125-2, 131) comprenant une première de fixation (125-1) qui présente une première rainure de fixation (127-1) qui contourne la face extérieure de paroi (123) de la paroi (107) radialement au moins par endroits, et un premier élément de fixation pouvant être raccordé à la première rainure de fixation (127-1) par complémentarité de forme et/ou par adhérence, et
ladite au moins une partie de fixation (125-1, 125-2, 131) comprenant une deuxième partie de fixation (131) qui s'écarte du dispositif de raccordement (100) en partant de la face extérieure de paroi (123) de la paroi (107), la deuxième partie de fixation (131) présentant une ouverture de réception (133) dans laquelle un deuxième élément de fixation peut être introduit pour raccorder le deuxième élément de fixation à la deuxième partie de fixation (125-2), et la première partie de fixation (125-1) et la deuxième partie de fixation (125-2) étant disposées sur des côtés opposés du dispositif de raccordement (100).

2. Dispositif de raccordement (100) selon la revendication 1, dans lequel le raccord de conduite (101) présente une paroi supplémentaire (109) qui présente une face intérieure de paroi supplémentaire (110), la face intérieure de paroi supplémentaire (110) délimitant une cavité (105) du dispositif de raccordement (100) pour conduire le fluide,
la paroi supplémentaire (109) présentant une face extérieure de paroi supplémentaire (113), et la face extérieure de paroi supplémentaire (113) de la paroi supplémentaire (109) et la face intérieure de paroi (110) de la paroi (107) délimitant la zone de réception (111) .

3. Dispositif de raccordement (100) selon la revendication 1 ou 2, dans lequel ladite au moins une partie de fixation (125-1, 125-2, 131) et la paroi (107) sont réalisées d'un seul tenant.

4. Dispositif de raccordement (100) selon l'une quelconque des revendications précédentes, dans lequel la paroi (107) et/ou la paroi supplémentaire (109) sont formées en forme d'anneau de manière périphérique sur le raccord de conduite (101), et en particulier la zone de réception (111) étant formée en forme d'anneau de manière périphérique sur le raccord de conduite (101).

5. Dispositif de raccordement (100) selon l'une quelconque des revendications précédentes, dans lequel la paroi (107) et/ou la paroi supplémentaire (109) s'étendent le long d'un axe longitudinal (103) du dispositif de raccordement (100).

6. Dispositif de raccordement (100) selon l'une quelconque des revendications précédentes, dans lequel la deuxième partie de fixation (131) présente une première zone de partie (135-1) qui est formée sur la face extérieure de paroi (123) de la paroi (107), et une deuxième zone de partie (135-2) qui comprend l'ouverture de réception (133), la première zone de partie (135-1) présentant une première épaisseur de paroi (137-1), et la deuxième zone de partie (135-2) présentant une deuxième épaisseur de paroi (137-2), et la première épaisseur de paroi (137-1) étant supérieure à la deuxième épaisseur de paroi (137-2).

7. Dispositif de raccordement (100) selon l'une quelconque des revendications précédentes, dans lequel le premier élément de fixation peut être raccordé à la première partie de fixation (125-1) par un raccordement par enclenchement.

8. Dispositif de raccordement (100) selon l'une quelconque des revendications précédentes, dans lequel la face intérieure de paroi (121) de la paroi (107) est réalisée de manière droite le long d'un axe longitudinal (103) du dispositif de raccordement (100).

9. Dispositif de raccordement (100) selon l'une quelconque des revendications 2 à 8, dans lequel la face extérieure de paroi supplémentaire (113) de la paroi supplémentaire (109) est réalisée en forme de courbe le long d'un axe longitudinal (103) du dispositif de raccordement (100).

10. Dispositif de raccordement (100) selon la revendication 9, dans lequel la face extérieure de paroi supplémentaire (113) de la paroi supplémentaire (109) présente une première partie de paroi (115) qui est réalisée de manière concave, et présente une deuxième partie de paroi (117) qui est réalisée de manière convexe et est adjacente à la première partie de paroi (115), et un point d'inflexion (119) étant disposé en particulier entre la première et la deuxième partie de paroi (117).

11. Agencement (200) permettant de raccorder des conduites de fluide (300), comprenant :
un dispositif de raccordement (100) permettant de raccorder des conduites de fluide (300) selon l'une quelconque des revendications 1 à 10 ; et
une conduite de fluide (300) qui est raccordée de manière fluidique avec le dispositif de raccordement (100) .

12. Procédé (400) permettant de raccorder des conduites de fluide (300), comprenant les étapes suivantes consistant à :
introduire (401) une conduite de fluide (300) dans un dispositif de raccordement (100) pour raccorder des conduites de fluide (300) selon l'une quelconque des revendications 1 à 10 ;
raccorder (403) la conduite de fluide (300) au dispositif de raccordement (100), en particulier par soudage ou collage ; et
raccorder (405) ladite moins une partie de fixation (125-1, 125-2, 131) du dispositif de raccordement (100) à au moins un élément de fixation.
